# EUROPEAN PATENT APPLICATION

(11) **EP 0 951 838 A1**
(43) Date of publication of application: **27.10.1999**
(21) Application number: 97950395.0
(22) Date of filing: 25.12.1997
(51) Int. Cl.: A23K 1/18, A23K 1/16

(54) **CAT FOOD**

(30) Priority: 11.11.1997 JP 30775297
(71) Applicant: Inaba Shokuhin Co. Ltd., Ihara-gun, Shizuoka 421-31 (JP); Nikko Shoji Co. Ltd., Tokyo 105 (JP)
(72) Inventor: INABA, Atsuhiro, Inaba Shokuhin Co., Ltd., Ihara-gun, Shizuoka 421-31 (JP)
(74) Representative: Cresswell, Thomas Anthony
(86) International application number: JP9704825
(87) International publication number: WO9923892

(57) **Abstract**

Cat food containing from 0.03 to 0.1 percent by weight of a green tea extract to easily reduce or prevent periodontal diseases of pet cats.

## Description

### Technical Field

The present invention relates to cat food more particularly to that capable of preventing periodontal diseases of cats.

### Background Art

Nowadays, many cats and dogs have been kept as pets.

These pets are usually kept indoors in the town, and their food, which is similar to that of humans, has been manufactured especially for them.

Such pet food is processed from fish, meat and the like with additional dairy products, vegetables, vitamins and so on. There are many types of pet food such as dry-type food in which less than 10 % of water is contained, semi-moist-type food in which 20-40 % of water is contained and wet-type food in which more than 70 % of water is contained.

These types of pet food, especially the wet-type pet food containing more water, are packed in containers by about 100 g. Thus, cats and dogs can easily be fed with an appropriate amount of the food. Accordingly, the food served from the container will not be left partially eaten so that the uneaten food, left behind for a long time, may not make a putrid smell.

In addition, there recently has provided pet food having a deodorant effect so that feces and urine of cats and dogs may not make a foul smell. Such pet food often contains a very small quantity (from 0.01 to 0.02 % by weight) of a green tea extract as an additive, whose principal ingredient is tannin, which has an antibacterial effect.

Since cats and dogs hate a bitter and astringent taste of a green tea extract, only a few manufacturers add a very small quantity of that to pet food.

Since recent pet food, similar to that of humans, is made to have a preferable taste for pets such as cats and dogs, there have frequently occurred oral diseases such as gingivitis and periodonitis in cats and dogs.

That is, when cats and dogs are continuously fed with pet food made especially for them, dental plaque is significantly accumulated in their mouths and oral bacteria causing gingivitis and periodonitis can be detected. As a result, bad breath develops in cats and dogs.

Particularly, bacteria named Porphyromonas asaccharolytica have recently been detected in the oral cavities of cats.

Such diseases of pets are of a great interest for their owners. Thus, there has been a long-felt need for preventing such diseases.

The present invention provides pet food that fulfils such requirement and that can prevent periodontal diseases of cats.

### Disclosure of Invention

The present invention provides cat food containing from 0.03 to 0.1 percent by weight of a green tea extract.

By adding the green tea extract as an additive to cat food, bacteria in the oral cavities of cats can be reduced and inflammatory diseases can be suppressed since the green tea extract has an antibacterial effect.

Furthermore, the present invention provides wet-type cat food containing from 0.03 to 0.05 percent by weight of a green tea extract.

When the wet-type cat food is made to contain from 0.03 to 0.05 percentage by weight of the green tea extract, cats can be administered with the green tea extract enough to kill bacteria causing periodonitis without losing their appetite.

Furthermore, the present invention provides dry-type cat food containing from 0.04 to 0.1 percent by weight of a green tea extract.

When the dry-type cat food is made to contain from 0.04 to 0.1 percent by weight of the green tea extract, cats can be administered with the green tea extract enough to reduce bacteria causing periodonitis without losing their appetite.

The green tea extract is made to contain from 40 to 50 percent by weight of tannin.

Since it is easy to purify the green tea extract containing from 40 to 50 percent by weight of tannin from green tea, it is easy to produce a food additive containing much natural tannin, which has an antibacterial effect. Therefore, it is possible to mass-produce foods with an antibacterial effect easily.

### Brief Description of the Drawings

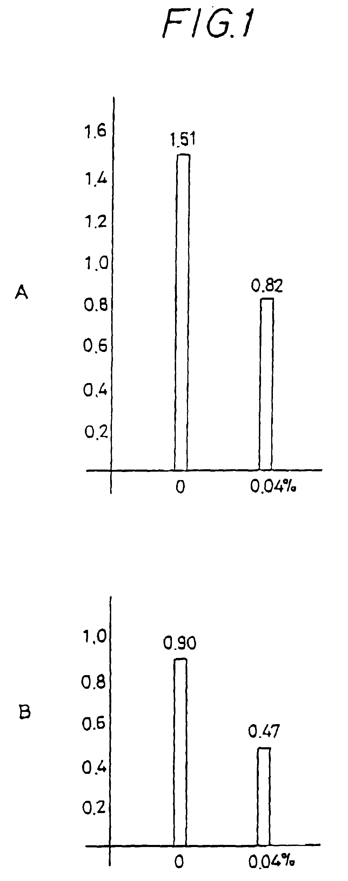

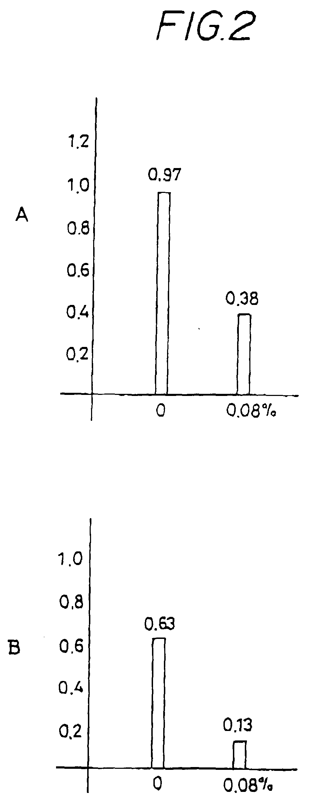

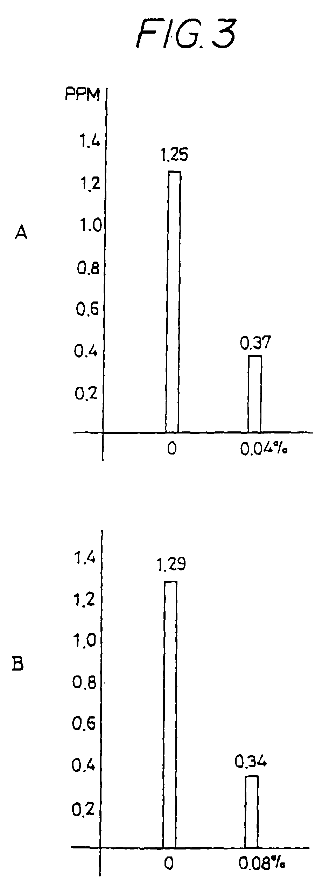

Fig. 1 is a graph showing changes in gingivitis indexes of cats. Fig. 2 is a graph showing changes in gingivitis indexes of cats. Fig. 3 is a graph showing concentrations of methylmercaptan in the oral cavities of cats.

### Best Mode for Carrying Out the Invention

The present invention uses a green tea extract as a food additive. Tannin (catechins), which is a principal ingredient of an extract from green tea (Camellia sinensis), is known to have a variety of effects such as an antibacterial effect, an antitoxic effect, an antioxidant effect, a deodorant effect and drug efficacy. In accordance with the present invention cat food added with the green tea extract with an antibacterial effect is manufactured and the cat food is fed to cats.

While the cat food was fed to cats, inspection of oral cavities, bacteria in dental plaque and halitosis is performed for about two months. As a result, differences in the anti-inflammatory effect against gingivitis, in the decrease of bacteria in dental plaque and in the improvement in halitosis occurred between the presence and the absence of the green tea extract in cat food. Thus, the green tea extract was found to be effective on prevention of periodonitis of cats.

The extract can be available from the materials such as green tea (non-fermented tea), oolong tea (partially fermented tea), black tea (fermented tea), and the like. We prepared the extract from Japanese green tea since it has similar ingredients to other kinds of tea and it is inexpensively available in great mass in Japan.

In order to obtain the green tea extract, Japanese green tea was treated in 95% ethanol at 80°C for four hours, and then the tea leaves were filtered out.

Then, the ethanol in the extract was distilled out and the rest was treated with active carbon in order to remove unnecessary ingredients and to concentrate an active ingredient. As a result, the green tea extract called Camellia 50 EX (trade name) was obtained, which contains 50 % of the active ingredient.

Table 1 shows an ingredient composition of the green tea extract.

**Table 1**

| | |
|---|---|
| Ingredient | Green tea extract (Camellia 50 EX) |
| Tannin | 41.6 % by weight |
| Chlorophyll | not determined |
| Chlorophyll a | not determined |
| Chlorophyll b | not determined |
| Carbohydrates | 21.8 % |
| Fats | 0.6 % |
| Minerals | 2.6 % |
| Amino acid compounds | 2.1 % |
| Caffeine | 4.2 % |

Furthermore, the result of analysis of tannins, which are active ingredients for antibacterial effect in the green tea extract, is shown in Table 2.

**Table 2**

| Result of analysis of tannins | |
|---|---|
| (-) epigallocatechin gallate | 17.8 % |
| (-) epigallocatechin | 11.8 % |
| (-) epicatechin gallate | 4.2 % |
| (-) epicatechin | 2.8 % |
| D(+) catechin | 0.4 % |

There has been already some reports showing that tannins in a green tea extract have a suppressive effect on proliferation of a variety of bacteria, and also on bacteria causing periodonitis of humans. However, since there has been no report on bacteria in oral cavities of cats, tests for confirming such effects were performed.

Since the green tea extract has a bitter and stringent taste because of tannin, its principal ingredient, it is hard for cats to take it. Thus, cat food (dry-type) containing the green tea extract is manufactured in order to let the cats take the extract spontaneously every day.

Cat food was prepared to contain either 0.08 % or 0.04 % by weight of the green tea extract. Cat food without the green tea extract was also prepared.

Accordingly, the cats were made to take about 0.09 g of the green tea extract every day with the cat food described above. As a result, it was observed that gingivitis and halitosis are improved and that the number of Porphyromonas bacteria in dental plaque decreased.

Cats irregularly take their meals several times a day and the amount of the food taken in each meal is also not constant. When a cat is fed with only dry-type food with water, it eats, on average, from 100 to 120 g of the food a day. When a cat is fed with only wet-type food is given with an adequate amount of water, it eats, on average, from 170 to 220 g of the food a day.

Thus, the dry-type cat food was made to contain 0.08 g of the green tea extract per 100 g and was continuously fed to cats, so that each cat may take about 0.09 g of the green tea extract a day.

Furthermore, when the food was made to contain 0.04 % by weight of the green tea extract so that each cat may take 0.04 g or more of the extract, a similar effect was observed.

When the cats are fed with the food containing 0.04 % by weight of the green tea extract together with the food without such extract so as to reduce the daily intake, though the inflammation tended to reduce, the effect could not be clearly observed.

As described above, the oral bacteria of cats could be reduced when each cats took about 0.1 g, not less than 0.05 g, of the green tea extract a day. In addition, even when the dry-type cat food was made to contain about 0.1 g by weight of the green tea extract, it was observed that the cats ate the food without hating the bitter and stringent taste of the green tea extract.

### EMBODIMENTS

### (1) Cat food

Dry-type cat food was manufactured, added with a green tea extract (Camellia 50 EX) containing about 40 % of tannin during processing.

Two samples of dry-type cat food were manufactured, one of which was made to contain 0.04 g of the green tea extract per 100 g of the food (0.04%) and the other of which was made to contain 0.08 g per 100 g (0.08%).

### (2) Cats subjected to tests

A sum total of thirty-two cats, some of which were reared in a laboratory animal facility and the others of which were kept in home as pets, were used for objects of tests.

The cats were preliminarily given a cat food without a green tea extract for two weeks in order to cancel the effects of the food fed so far.

After that, the sixteen of them were fed with dry-type food added with 0.04 % of the green tea extract for six weeks. On the other hand, the other sixteen were fed with dry-type food added with0.08 % of green tea extract for six weeks. Then the following confirmation and assessment were performed.

### (3) A method for confirmation of preventive effect on periodontal diseases in cats

Follow-up tests were performed for examining bacteria colonies in dental plaque of cat, changes in ongoing gingivitis, changes in halitosis in cats, which significantly arose during periodontal diseases.

### (a) A bacterial test in dental plaque in cats

Among dental plaque under gum lines of cats, Porphyromonas, which was particularly often found in cats, was aimed and the total number of the bacteria in the oral cavities was determined before and after the intake of the sample cat food.

The bacteria collected from the dental plaque were cultured in an anaerobic condition. BHI medium supplemented with 5 % of horse blood was used for measuring total bacterial count. Black colonies, which Porphyromonas formed on the medium, were counted and the ratio of Porphyromonas to the total bacteria was determined, so that efficacy was estimated.

### (b) Effects on cats with ongoing gingivitis.

Samples of cat food were fed to cats with ongoing gingivitis and changes in severity of the gingivitis were observed, so that significant differences were determined according to a gingival index (a method for estimating severity of inflammation of the gums).

As a result, as shown in Fig. 1A, the sixteen cats, though they showed an average gingival index of 1.51 around molar teeth when they were fed with cat food without a green tea extract, showed a reduced average gingival index of 0.82 after they were fed with cat food containing 0.04 % of the green tea extract for six weeks. In addition, as shown in Fig 1B, the cats, though they showed an average gingival index of 0.90 around canine teeth when they were fed with cat food without a green tea extract, showed a reduced average gingival index of 0.47 after they were fed with cat food containing 0.04 % of the green tea extract for six weeks.

That is, the gingival index reduced to 54 % around the molar teeth and to 52 % around the canine teeth after the cats were administered with daily average dose of 0.04 to 0.05 g of the green tea extract for six week by feeding them with dry-type cat food added with 0.04 % of the green tea extract.

On the other hand, as shown in Fig. 2A, the other sixteen cats, though they showed an average gingival index of 0.97 around molar teeth when they were fed with cat food without a green tea extract, showed a reduced average gingival index of 0.38 after they were fed with cat food containing 0.08 % of the green tea extract for six weeks. In addition, as shown in Fig. 2B, the cats, though they showed an average gingival index of 0.63 around canine teeth when they were fed with cat food without a green tea extract, showed a reduced average gingival index of 0.13 after they were fed with cat food containing 0.08 % of the green tea extract for six weeks.

That is, the gingival index reduced to 39 % around the molar teeth and to 21 % around the canine teeth after the cats were administered with daily average dose of 0.08 to 0.1 g of the green tea extract for six week by feeding them with dry-type cat food added with 0.08 % of the green tea extract.

Furthermore, deposition of dental calculus was examined and a calculus index for each individual was studied.

### (c) A suppressive effect on halitosis

With respect to the relationship between periodonitis and halitosis, severity of symptom is directly proportional to that of halitosis in cats as well as in humans. Methylmercaptan, one of the ingredients of halitosis, is produced by bacteria. Amounts of this ingredient in the oral cavity were quantified before and after the administration of samples of cat food, so that efficacy was determined by the changes of that.

As a result, as shown in Fig. 3A, the sixteen cats, though they showed an average concentration of 1.25 ppm of methylmercaptan in the oral cavities when they were fed with cat food without a green tea extract, showed a reduced average concentration of 0.375 ppm after they were fed with cat food containing 0.04 % of the green tea extract for six weeks. On the other hand, as shown in Fig. 3B, the other sixteen cats, though they showed an average concentration of 1.29 ppm of methylmercaptan in the oral cavities when they were fed with cat food without a green tea extract, showed a reduced average concentration of 0.34 ppm after they were fed with cat food containing 0.08 % of the green tea extract for six weeks.

That is, the average concentration of methylmercaptan reduced to 30 % after the cats were administered with daily average dose of 0.04 to 0.05 g of the green tea extract for six week by feeding them with dry-type cat food added with 0.04 % of the green tea extract. Moreover ,the average concentration of methylmercaptan reduced to 26 % after the cats were administered with daily average dose of 0.08 to 0.1 g of the green tea extract for six week by feeding them with dry-type cat food added with 0.08 % of the green tea extract.

A halitosis detector (BB checker) with an internal high sensitive semiconductor sensor was used as a determination instrument.

### (4) Results

After the cats were fed with cat food containing a green tea extract, the number of Porphyromonas in the total bacteria in dental plaque apparently reduced compared with that during the cats were fed with cat food without a green tea extract.

In addition, the reduction of the number of Porphyromonas when the cat were fed dry-type cat food added with 0.04 % of the green tea extract differed significantly from that when the cat were fed dry-type cat food added with 0.04 % of the green tea extract.

Moreover, severity of gingivitis in the oral cavity apparently improved when samples fed to the cats were added with the green tea extract.

This improvement was shown as a significant reduction in gingival indexes.

Furthermore, cats with mild gingivitis were found to be the most effective. Cats without gingivitis maintained the condition, and cats with severe gingivitis showed only slight improvement of inflammation. These cats were estimated to need fundamental treatments.

With respect to a suppressive effect on halitosis, a concentration of methylmercaptan was apparently decreased after the cats were fed with the samples added with the green tea extract. Moreover, the concentration was much significantly decreased when the cats were fed with the samples added with 0.08 % of the green tea, so that effect of the green tea extract on suppression of halitosis was apparent.

In the present test as described above, both types of cat food added with 0.04 % and 0.08 % of the green tea extract showed to be effective compared with the cat food without the extract. Furthermore, it was clear that the sample added with 0.08 % of the green tea extract, which was higher additional rate, showed to be more effective.

### (5) Conclusion

Periodontal diseases in cats were found to be apparently prevented by administering the cats with 0.04 g to 0.1 g of the green tea extract a day.

In addition, cats did not hate to eat the cat food containing up to 0.08 % by weight of a green tea extract. Thus the cats were able to take a sufficient amount of the green tea extract. Therefore, the cat food was found to be useful as means of preventing periodontal diseases in cats.

Accordingly, the invention described in claim 1 is cat food containing from 0.03 to 0.1 % by weight of a green tea extract. When the cat food is fed to cats, periodontal diseases of cats can be suppressed.

Furthermore, the invention described in claim 2 is wet-type cat food containing from 0.03 to 0.05 % by weight of a green tea extract. The food does not lessen the appetite of cats, so that the cats can take a sufficient amount of the green tea extract for preventing periodontal diseases of cats.

Furthermore, the invention described in claim 3 is dry-type cat food containing from 0.04 to 0.1 % by weight of a green tea extract. The food does not lessen the appetite of cats, so that the cats can take a sufficient amount of the green tea extract for preventing periodontal diseases of cats.

Furthermore, the invention described in claim 4 is cat food according to claim 1, 2 or 3, wherein the green tea extract contains from 40 to 50 % by weight of tannin. The green tea extract can be mass-produced as a food additive for preventing periodontal diseases of cats.

### Industrial Applicability

As described above, the present invention can be available for cat food capable of preventing periodontal diseases of cats. In accordance with the present invention, either wet-type food or dry-type food can be simultaneously composed without loss of appetite of the cats.

## Claims

1. Cat food containing from 0.03 to 0.1 percent by weight of a green tea extract.

2. Wet-type cat food containing from 0.03 to 0.05 percent by weight of a green tea extract.

3. Dry-type cat food containing from 0.04 to 0.1 percent by weight of a green tea extract.

4. Cat food according to claim 1, 2 or 3, wherein the green tea extract contains from 40 to 50 percent by weight of tannin.
